(19) Europäisches Patentamt
European Patent Office
Office européen des brevets

(11) EP 3 447 838 B1

(12) **EUROPEAN PATENT SPECIFICATION**

(45) Date of publication and mention of the grant of the patent:
**11.11.2020 Bulletin 2020/46**

(21) Application number: **17784825.6**

(22) Date of filing: **24.08.2017**

(51) Int Cl.:
***H01M 10/0566*** *(2010.01)* ***H01M 4/58*** *(2010.01)*
***H01M 4/583*** *(2010.01)* ***H01M 10/0567*** *(2010.01)*

(86) International application number:
**PCT/CN2017/098784**

(87) International publication number:
**WO 2018/232979 (27.12.2018 Gazette 2018/52)**

(54) **LITHIUM IRON PHOSPHATE BATTERY**

LITHIUM-EISENPHOSPHAT-BATTERIE

BATTERIE LITHIUM-PHOSPHATE DE FER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2017 CN 201710486002**

(43) Date of publication of application:
**27.02.2019 Bulletin 2019/09**

(73) Proprietor: **Contemporary Amperex Technology Co., Limited**
**Jiaocheng District**
**Ningde City**
**Fujian 352100 (CN)**

(72) Inventors:
- **TIAN, Shaojie**
**Ningde City**
**Fujian 352100 (CN)**
- **HAN, Changlong**
**Ningde City**
**Fujian 352100 (CN)**
- **JU, Feng**
**Ningde City**
**Fujian 352100 (CN)**
- **ZHANG, Cui**
**Ningde City**
**Fujian 352100 (CN)**

(74) Representative: **Boult Wade Tennant LLP**
**Salisbury Square House**
**8 Salisbury Square**
**London EC4Y 8AP (GB)**

(56) References cited:

**CN-A- 101 394 008**
**CN-A- 102 983 358**
**CN-A- 105 789 611**
**CN-A- 105 789 611**
**CN-A- 105 789 684**
**CN-A- 106 328 996**
**JP-B2- 5 472 041**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 447 838 B1

## Description

### TECHNICAL FIELD

The present application relates to the field of batteries, and more particularly, to a lithium iron phosphate battery.

### BACKGROUND

Lithium-iron secondary batteries are widely used in electric vehicles and consumer electronics because of their high energy density, high output power, long cycle life and small environmental pollution. Lithium iron phosphate is one of the most commonly used positive materials in power battery, due to its high cycle life, good safety and low price and other characteristics. The disadvantage of lithium iron phosphate batteries is that their energy density is low. To improve the energy density, one way is to increase the capacity per gram of the positive material and negative material, and the other way is to increase the press density of the positive electrode film and negative electrode film. However, it is difficult to diffuse the lithium irons after increasing the press density, and the wettability of the electrode plate in the electrolyte is deteriorated, so that the cycle life of the lithium iron phosphate battery is reduced. Therefore, there is a need to improve the performance of lithium iron phosphate batteries having a high press density electrode plate system from the perspective of electrolyte.

CN102983358A discloses a non-aqueous electrolyte solution for a lithium iron phosphate lithium-ion battery. The non-aqueous electrolyte solution is composed of 4 components: a lithium salt, a carbonate and/or ether organic solvent, a functional additive, and other additives, wherein the non-aqueous electrolyte solution comprises 0.001 to 2mol/L of a lithium salt, 0.01 to 20% by mass of the functional additive, and the other additive is present in an amount of 0 to 0.5mol/L of the electrolyte solution.

### SUMMARY

In view of the problems as mentioned in the background art, it is an object of the present application to provide a lithium iron phosphate battery capable of solving the problem of poor wettability of an electrode plate having high press density in an electrolyte, to improve the low-temperature performance and the cycle performance at normal temperature and high temperature of a lithium iron phosphate battery, and to effectively prolong the service life of lithium iron phosphate battery.

In order to achieve the above objects, the present application provides a lithium iron phosphate battery comprising: a positive electrode plate comprising a positive current collector and a positive electrode film provided on the surface of the positive current collector; a negative electrode plate comprising a negative current collector and a negative electrode film provided on the surface of the negative current collector; a separator provided between the positive electrode plate and the negative electrode plate; and an electrolyte comprising an organic solvent, a lithium salt and an electrolyte additive. The positive active material in the positive electrode plate comprises lithium iron phosphate; and the negative active material in the negative electrode plate comprises graphite. The electrolyte additive comprises a cyclic carbonate containing a double bond and a cyclic disulfonate represented by the Formula I; in Formula I, A and B are each independently selected from an alkylene group having 1 to 3 carbon atoms.

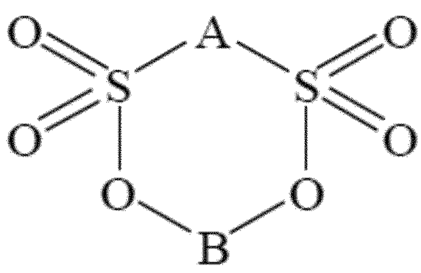

Formula I

Compared with the prior art, the present application has the following advantages: the present application can solve the problem that the electrode plate with high press density has poor wettability in the electrolyte, so that the low temperature performance and the cycle performance at normal temperature and high temperature of the lithium iron phosphate battery are improved, and the service life of the lithium iron phosphate battery is prolonged effectively.

## DETAILED DESCRIPTION

The lithium iron phosphate battery according to the present application will be described in details below.

The lithium iron phosphate battery according to the present application comprises a positive electrode plate comprising a positive current collector and a positive electrode film provided on the surface of the positive current collector; a negative electrode plate comprising a negative current collector and a negative electrode film provided on the surface of the negative current collector; a separator provided between the positive electrode plate and the negative electrode plate; and an electrolyte comprising an organic solvent, a lithium salt and an electrolyte additive. The positive active material in the positive electrode plate comprises lithium iron phosphate; and the negative active material in the negative electrode plate comprises graphite. The electrolyte additive comprises a cyclic carbonate containing a double bond and a cyclic disulfonate represented by the formula I; in formula I, A and B are each independently selected from an alkylene group having 1 to 3 carbon atoms, wherein in the electrolyte the cyclic carbonate containing a double bond is present in an amount of 0.5% to 4% by mass; and the cyclic disulfonate is present in an amount of 0.2% to 1% by mass; and the electrolyte has a conductivity of 8 mS/cm to 11 mS/cm at 25°C; and the electrolyte has a viscosity of 2mPa.s to 4 mPa.s at 25°C.

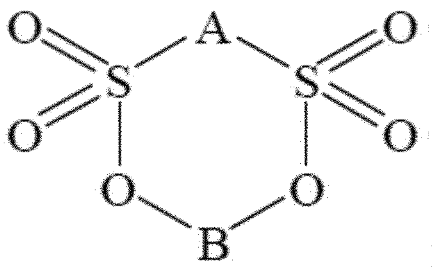

Formula I

In the lithium iron phosphate battery according to the present application, the cyclic carbonate containing a double bond can improve the capacity retention rate of the lithium iron phosphate battery in the high temperature environment, but the unavoidable problem is that the SEI film impedance is increased, which will affect the use of lithium iron phosphate battery in the low temperature environment. The cyclic disulfonate shown in Formula I can reduce the SEI film impedance. The combination of the cyclic carbonate containing a double bond and the cyclic disulfonate used in the electrolyte can improve the low temperature performance and the cycle performance at normal temperature and high temperature of the lithium iron phosphate battery and effectively prolong the service life of the lithium iron phosphate battery.

In the lithium iron phosphate battery according to the present application, the cyclic carbonate containing a double bond may be selected from one or both of vinylene carbonate (VC) and vinyl ethylene carbonate (VEC).

In the lithium iron phosphate battery according to the present application, in the electrolyte the content of the cyclic carbonate containing a double bond is 0.5% to 4% by mass. If the content is low, SEI film will be unstable and the cycle performance at high temperature of the lithium iron phosphate battery will be deteriorated; if the content is high, it will result in too thick SEI film and Li plating will occur after the lithium iron phosphate battery cycles, which will lead to cycle capacity diving. Preferably, the content of the cyclic carbonate containing a double bond is 0.5% to 3% by mass.

In the lithium iron phosphate battery according to the present application, the cyclic disulfonate may be selected from one or more of methylene methane disulfonate (MMDS), ethylene ethane disulfonate and propylene methane disulfonate.

If the content is too low, the effect on the improvement of the SEI film impedance is very little, and if the content is too high, such cyclic disulfonate is easy to crystallize and precipitate in the electrolyte. At the same time, because of its poor high-temperature stability, the high addition amount is more likely to deteriorate the electrochemical performance of the lithium iron phosphate battery. The cyclic disulfonate is present in an amount of from 0.2% to 1% by mass.

In the lithium iron phosphate battery according to the present application, the charge cut-off voltage of the lithium iron phosphate battery may not exceed 3.8 V, and preferably, the charge cut-off voltage of the lithium iron phosphate battery may not exceed 3.6 V. This is because that the performance of vinylene carbonate (VC), vinyl ethylene carbonate (VEC) and cyclic disulfonate at high voltage is unstable, easily decomposed by oxidation, and the probability of side reaction in the electrolyte is higher. In addition, even in the case that the added amount is very small the side reaction product will deteriorate the performance of the SEI film formed on the surface of the negative electrode, so that the charging cut-off voltage should not be too high. Under such conditions, the SEI film of the electrolyte according to the present application is better and the impedance is smaller, and the wettability of the electrode plate in the electrolyte is excellent. Thus the low temperature performance and the cycle performance at normal temperature and high temperature of the lithium iron phosphate battery containing the high-press density electrode plate can be more remarkably

improved.

In the lithium iron phosphate battery according to the present application, the press density of the negative electrode plate may be 1.4 g/$cm^3$ to 1.8g/$cm^3$. If the press density is too low, the contact resistance between the powder particles will increase, and the overall energy density of the lithium iron phosphate battery will be too low; if the press density is too high, the electrode plate will be easily crushed and the cycle performance of the lithium iron phosphate battery will be deteriorated.

In the lithium iron phosphate battery according to the present application, the press density of the positive electrode plate may be 2 g/$cm^3$ to 2.5 g/$cm^3$. If the press density is too low, the contact resistance between the powder particles will increase, and the overall energy density of the lithium iron phosphate battery will be too low; if the press density is too high, the electrode plate will be easily crushed and the cycle performance of the lithium iron phosphate battery will be deteriorated.

On the surface of the negative electrode plate having a high press density, the electrolyte according to the present application can form a denser and more stable SEI film than the conventional electrolyte, and the SEI film has small impedance and the electrode plate has good wettability in the electrolyte. Thus in the lithium iron phosphate battery containing a negative electrode plate having a high press density, the electrolyte according to the present application can make the lithium iron phosphate battery have good low temperature performance and good cycle performance at normal temperature and high temperature.

In the lithium iron phosphate battery according to the present application, the electrolyte has a conductivity of 8 mS/cm to 11 mS/cm at 25°C. If the conductivity is too low, the dynamic performance of the electrolyte will be poor, and the lithium iron phosphate battery's polarization is great, affecting the cycle performance at normal temperature and low temperature performance; if the conductivity is too high, the thermal stability of the electrolyte will be poor, resulting in the lithium iron phosphate battery having poor cycle performance at high temperature.

In the lithium iron phosphate battery according to the present application, the viscosity of the electrolyte at 25°C ranges from mPa·s to 4 mPa·s. If the viscosity is too high, on one hand the dynamic performance of the electrolyte will be poor, on the other hand the ability of the electrolyte for infiltrating the electrode plate will decline, which will deteriorate the comprehensive performance of the lithium iron phosphate battery; if the viscosity is too low, the thermal stability of the electrolyte will be poor, resulting in the lithium iron phosphate battery having poor cycle performance at high temperature.

In the lithium iron phosphate battery according to the present application, the type of the lithium salt is not limited and can be selected according to the actual demands. Preferably, the lithium salt may be selected from one or more of $LiPF_6$, $LiBF_4$, LiBOB, $LiAsF_6$, $LiCF_3SO_3$, LiFSI and LiTFSI.

In the lithium iron phosphate battery according to the present application, the organic solvent may be selected from one or more of ethylene carbonate, propylene carbonate, butylene carbonate, pentylene carbonate, 1,2-butylene glycol carbonate, 2,3-butylene glycol carbonate, dimethyl carbonate, diethyl carbonate, dipropyl carbonate, methyl ethyl carbonate, methyl formate, ethyl formate, propyl formate, methyl acetate, ethyl acetate, propyl acetate, methyl propionate, ethyl propionate, propyl propionate, methyl butyrate and ethyl butyrate.

In the lithium iron phosphate battery according to the present application, it is preferable that the organic solvent comprises a mixed solvent of a cyclic carbonate and a chain carbonate. Such mixed solvent can be conducive to the preparation of an electrolyte having better conductivity, viscosity and other comprehensive performance.

In the lithium iron phosphate battery according to the present application, it is further preferable that the organic solvent comprises a chain carbonate having a methyl group. Still more preferably, the content of the chain carbonate having a methyl group may be 40% or more by mass based on the total mass of the organic solvent of the electrolyte. The chain carbonate having a methyl group is preferably selected from one or two of dimethyl carbonate and methyl ethyl carbonate. Chain carbonate having a methyl group helps to further improve the anti-overcharge performance of the electrolyte. When the content of the chain carbonate having a methyl group is 40% or more by mass, the conductivity, viscosity and other comprehensive performance of the electrolyte are better.

In the lithium iron phosphate battery according to the present application, it is preferable that the organic solvent further comprises a carboxylic acid ester and the content of the carboxylic acid ester is less than 30% by mass based on the total mass of the organic solvent of the electrolyte. The addition of the carboxylic acid ester can further improve the conductivity and viscosity of the electrolyte, improve the wettability of the electrode plate having high press density in the electrolyte, and further improve the low temperature performance and other electrochemical performance of the lithium iron phosphate battery. However, if the content of the carboxylic acid ester is too high, it will affect the stability at high temperature of the electrolyte and deteriorate the cycle performance at high temperature of the lithium iron phosphate battery. Meanwhile, due to that the oxidation potential of the carboxylic acid ester is lower than that of the cyclic carbonate and the chain carbonate, adding too much carboxylic acid ester may increase the gas production of lithium iron phosphate battery.

The present application will be described in further detail with reference to the following examples, in order to make the object of the present application, the technical solution and the advantageous technical effects clearer. It

should be understood that the embodiments described in this specification are merely for the purpose of explaining the disclosure and are not intended to limit the scope of the disclosure. The formulation of the examples, the proportions, and the like may have no substantial effect on the results.

Examples 1-15 and Comparative Examples 1-13 were prepared according to the following methods.

1. Preparation of positive electrode plate

The positive active material lithium iron phosphate, the binder PVDF and the conductive agent acetylene black were mixed in a mass ratio of 98: 1: 1. Then N-methylpyrrolidone was added and the mixture was stirred uniformly under a vacuum stirrer to obtain a positive electrode paste. The positive electrode paste was evenly coated on the aluminum foil, and the aluminum foil was dried at room temperature and then transferred to a blast drying oven at 120°C for 1 hour. Then, the positive electrode plate was obtained after cold pressing and slitting.

2. Preparation of negative electrode plate

The negative active material graphite, the conductive agent acetylene black, the thickening agent sodium carboxymethyl cellulose (CMC) solution and the binder styrenebutadiene rubber emulsion were mixed in the mass ratio of 97: 1: 1: 1. Then deionized water was added and the mixture was stirred uniformly under a vacuum stirrer to obtain a negative electrode paste. The negative electrode paste was evenly coated on the copper foil, and the copper foil was dried at room temperature and then transferred to a blast drying oven at 120°C for 1 hour. Then, the negative electrode plate was obtained after cold pressing and slitting.

3. Preparation of electrolyte

The organic solvent was a mixed organic solvent of ethylene carbonate (EC), methyl ethyl carbonate (EMC), diethyl carbonate (DEC), dimethyl carbonate (DMC) and methyl propionate (MP). Lithium salt was $LiPF_6$, wherein the content of $LiPF_6$ was 12.5% by mass, based on the total mass of the electrolyte. Finally the cyclic carbonate containing a double bond and cyclic disulfonate were added. The mass content of each component in the electrolyte was shown in Table 1. By adjusting the adding proportion of each component, the conductivity and viscosity of the electrolyte can be adjusted correspondingly.

4. Preparation of lithium iron phosphate battery

The positive electrode plate, the negative electrode plate and the separator were wound to obtain a battery core, and the battery core was put into the packaging shell, the electrolyte was injected and sealed. The lithium iron phosphate battery was obtained by the steps of standing, pressing, forming, degassing and the like.

Table 1. Process parameters of Examples 1-15 and Comparative examples 1-13

| | Press density g/m$^3$ | | The composition of the organic solvent (mass ratio) EC/DEC/EMC/DMC/MP | cyclic carbonate containing a double bond | | cyclic disulfonate | | Conductivity of the electrolyte mS/cm | Viscosity of the electrolyte mPa.s |
|---|---|---|---|---|---|---|---|---|---|
| | Positive electrode plate | Negative electrode plate | | type | content | type | content | | |
| Comparative example 1 | 2.1 | 1.5 | 3:1:5:1:0 | VC | 2.0% | / | / | 9.01 | 3.10 |
| Comparative example 2 | 2.1 | 1.7 | 3:1:5:1:0 | VC | 2.0% | / | / | 9.01 | 3.10 |
| Comparative example 3 | 2.4 | 1.7 | 3:1:5:1:0 | VC | 2.0% | / | / | 9.01 | 3.10 |
| Comparative example 4 | 2.4 | 1.7 | 3:1:5:1:0 | VC | 1.0% | / | / | 8.93 | 3.12 |
| Comparative example 5 | 2.4 | 1.7 | 3:1:5:1:0 | VC | 3.0% | / | / | 9.12 | 3.15 |
| Comparative example 6 | 2.4 | 1.7 | 3:1:5:1:0 | VEC | 2.0% | / | / | 9.04 | 3.14 |
| Comparative example 7 | 2.4 | 1.7 | 3:1:5:1:0 | / | / | / | / | 8.83 | 3.08 |
| Comparative example 8 | 2.4 | 1.7 | 3:1:5:1:0 | VC | 0.2% | Methylenemethanedisulfonate | 0.1% | 8.84 | 3.09 |
| Comparative example 9 | 2.4 | 1.7 | 3:1:5:1:0 | VC | 5.0% | Methylenemethanedisulfonate | 0.2% | 9.26 | 3.23 |
| Comparative example 10 | 2.4 | 1.7 | 3:1:5:1:0 | VC | 0.2% | Methylenemethanedisulfonate | 3.0% | 8.87 | 3.10 |
| Comparative example 11 | 2.4 | 1.7 | 4:0:6:0:0 | VC | 2.0% | Methylenemethanedisulfonate | 0.2% | 7.75 | 4.13 |
| Comparative example 12 | 2.4 | 1.7 | 3:5:2:0:0 | VC | 2.0% | Methylenemethanedisulfonate | 0.2% | 7.49 | 3.53 |

(continued)

| | Press density $g/m^3$ | | The composition of the organic solvent (mass ratio) EC/DEC/EMC/DMC/MP | cyclic carbonate containing a double bond | | cyclic disulfonate | | Conductivity of the electrolyte mS/cm | Viscosity of the electrolyte mPa.s |
|---|---|---|---|---|---|---|---|---|---|
| | Positive electrode plate | Negative electrode plate | | type | content | type | content | | |
| Comparative example 13 | 2.4 | 1.7 | 3:0:1:1:5 | VC | 2.0% | Methylenemethanedisulfonate | 0.2% | 12.84 | 1.95 |
| Example 1 | 2.1 | 1.5 | 3:1:5:1:0 | VC | 2.0% | Methylenemethanedisulfonate | 0.2% | 9.02 | 3.12 |
| Example 2 | 2.1 | 1.7 | 3:1:5:1:0 | VC | 2.0% | Methylenemethanedisulfonate | 0.2% | 9.02 | 3.12 |
| Example 3 | 2.4 | 1.7 | 3:1:5:1:0 | VC | 2.0% | Methylenemethanedisulfonate | 0.2% | 9.02 | 3.12 |
| Example 4 | 2.4 | 1.7 | 3:1:5:1:0 | VC | 2.0% | Methylenemethanedisulfonate | 0.5% | 9.03 | 3.14 |
| Example 5 | 2.4 | 1.7 | 3:1:5:1:0 | VC | 2.0% | Methylenemethanedisulfonate | 1.0% | 9.05 | 3.17 |
| Example 6 (comparative) | 2.4 | 1.7 | 3:1:5:1:0 | VC | 2.0% | Methylenemethanedisulfonate | 2.0% | 9.08 | 3.20 |
| Example 7 | 2.4 | 1.7 | 3:1:5:1:0 | VC | 1.5% | Methylenemethanedisulfonate | 0.5% | 9.03 | 3.15 |
| Example 8 | 2.4 | 1.7 | 3:1:5:1:0 | VC | 2.5% | Methylenemethanedisulfonate | 0.5% | 9.09 | 3.22 |
| Example 9 | 2.4 | 1.7 | 3:1:5:1:0 | VC | 4.0% | Methylenemethanedisulfonate | 0.5% | 9.23 | 3.24 |
| Example 10 | 2.4 | 1.7 | 3:1:5:1:0 | VEC | 2.0% | Methylenemethanedisulfonate | 0.5% | 9.22 | 3.23 |
| Example 11 | 2.4 | 1.7 | 3:1:5:1:0 | VEC | 2.0% | Ethyleneethanedisulfonate | 0.5% | 9.22 | 3.24 |
| Example 12 | 2.4 | 1.7 | 3:1:3:3:0 | VEC | 2.0% | Propylenemethanedisulfonate | 0.5% | 9.98 | 3.16 |
| Example 13 | 2.4 | 1.7 | 3:2:5:0:0 | VEC | 2.0% | Propylenemethanedisulfonate | 0.5% | 8.15 | 3.37 |
| Example 14 | 2.4 | 1.7 | 3:0:5:2:0 | VEC | 2.0% | Propylenemethanedisulfonate | 0.5% | 9.87 | 3.11 |
| Example 15 | 2.4 | 1.7 | 3:0:5:0:2 | VEC | 2.0% | Propylenemethanedisulfonate | 0.5% | 10.58 | 2.92 |

Next to explain the test of lithium iron phosphate battery.

(1) Test of discharge capacity at low temperature

At 25°C, the lithium iron phosphate battery was firstly discharged to 2.0V with a current of 1C; and then charged to 3.6V with a constant current of 1C, and then charged to a current of 0.05C with a constant voltage, wherein the charge capacity was represented by CC; and then the furnace temperature was adjusted to -10°C, and the battery was discharged to 2.0V with a constant current of 1C, wherein the discharge capacity was represented by CDT. The ratio of discharge capacity to charge capacity is a discharge capacity retention rate.

The discharge capacity retention rate(%) of lithium iron phosphate battery at -10°C = CDT/CC × 100%.

(2) Cycle test at normal temperature

At 25°C, the lithium iron phosphate battery was firstly discharged to 2.0V with a current of 1C, and then was subjected to the cycle test. The battery was charged to 3.6V with a constant current of 1C, and then charged to the current of 0.05C with a constant voltage, and then discharged to 2.0V with a constant current of 1C. Charging/discharging cycles were done in such way. Then, the cycle capacity retention rate of the lithium iron phosphate battery of $1000^{th}$ cycle at 25°C was calculated.

Cycle capacity retention rate of the lithium iron phosphate battery (%) of $1000^{th}$ cycle at 25°C = discharge capacity of the $1000^{th}$ cycle/discharge capacity at the first cycle × 100%.

(3) Cycle test at high temperature

At 25°C, the lithium iron phosphate battery was first discharged to 2.0V with a current of 1C, and then was subjected to the cycle test. The oven was heated to 60°C, and then the battery was charged to 3.6 V with a constant current of 1C, and then charged to the current of 0.05C with a constant voltage, and then discharged to 2.0V with a constant current of 1C. Charging/discharging cycles were done in such way. Then, the cycle capacity retention rate of the lithium iron phosphate battery of $500^{th}$ cycle at 60°C was calculated.

Cycle capacity retention rate of the lithium iron phosphate battery (%) of $500^{th}$ cycle at 60°C = discharge capacity of the $500^{th}$ cycle/discharge capacity at the first cycle × 100%.

Table 2. Test results of Examples 1-15 and Comparative examples 1-13

| | discharge capacity retention rate at -10°C | Cycle capacity retention rate of $1000^{th}$ cycle at 25°C | Cycle capacity retention rate of $500^{th}$ cycle at 60°C |
|---|---|---|---|
| Comparative example 1 | 84.10% | 89.40% | 87.50% |
| Comparative example 2 | 82.30% | 88.70% | 86.00% |
| Comparative example 3 | 80.40% | 87.90% | 85.80% |
| Comparative example 4 | 87.40% | 85.40% | 82.50% |

(continued)

| | discharge capacity retention rate at -10°C | Cycle capacity retention rate of 1000th cycle at 25°C | Cycle capacity retention rate of 500th cycle at 60°C |
|---|---|---|---|
| Comparative example 5 | 70.60% | 86.50% | 89.30% |
| Comparative example 6 | 75.40% | 85.30% | 85.20% |
| Comparative example 7 | 90.30% | 58.00% | 37.80% |
| Comparative example 8 | 90.10% | 63.40% | 44.50% |
| Comparative example 9 | 68.70% | 80.40% | 88.30% |
| Comparative example 10 | 88.70% | 84.50% | 81.20% |
| Comparative example 11 | 64.50% | 74.50% | 83.50% |
| Comparative example 12 | 74.50% | 81.60% | 83.90% |
| Comparative example 13 | 88.70% | 90.50% | 81.40% |
| Example 1 | 85.20% | 90.10% | 87.80% |
| Example 2 | 84.20% | 89.10% | 87.20% |
| Example 3 | 83.50% | 88.40% | 86.40% |
| Example 4 | 86.40% | 91.20% | 87.30% |
| Example 5 | 86.30% | 90.90% | 86.00% |
| Example 6 | 87.40% | 91.30% | 84.50% |
| Example 7 | 88.20% | 92.30% | 85.30% |
| Example 8 | 83.60% | 89.60% | 88.40% |
| Example 9 | 75.40% | 84.50% | 89.60% |
| Example 10 | 83.40% | 88.40% | 86.00% |
| Example 11 | 82.40% | 88.00% | 85.80% |
| Example 12 | 81.50% | 87.50% | 85.70% |
| Example 13 | 80.40% | 86.50% | 86.20% |
| Example 14 | 82.70% | 88.10% | 84.80% |
| Example 15 | 85.20% | 88.90% | 83.40% |

As can be seen from Comparative Examples 1-3, if the press density of the positive electrode film and negative electrode film was improved, the performance of the lithium iron phosphate battery was rapidly decreased without adding the MMDS. However, in Examples 1 to 3, the press density of the positive electrode film and negative electrode film was improved, and the downtrend of the lithium iron phosphate battery performance was remarkably changed after the addition of MMDS into the electrolyte, and the cycle life of the lithium iron phosphate battery was prolonged. This shows that in the lithium iron phosphate battery system comprising high press density electrode plate, the low temperature performance and the cycle performance at normal temperature and high temperature of lithium iron phosphate battery can be improved by adjusting the ratio and the amount of the cyclic carbonate containing a double bond and the cyclic disulfonate.

In Comparative Example 7, when using a high-press density positive electrode film and negative electrode film, it was difficult to infiltrate the electrode plate with the electrolyte, resulting in a low capacity retention rate of the lithium iron phosphate battery after cycles at normal temperature and at high temperature, which will in turn affect the service life at normal temperature and high temperature. In Comparative Example 3 and Comparative Example 6, VC and VEC were added, respectively, which can significantly improve the cycle performance at normal temperature and high temperature of lithium iron phosphate battery, but the unavoidable problem was that the SEI film impedance was increased, which will affect the use of the lithium iron phosphate battery in low temperature environment. As can be seen from Comparative Examples 3-5, the high-temperature cycle performance of the lithium iron phosphate battery was improved with the increase of the VC content, but the low temperature performance and the cycle performance at normal temperature were deteriorated due to that the impedance of the solid electrolyte interface film (SEI film) was increased. In Examples 4 and 8-11, 0.5% of the cyclic disulfonate was added into the electrolyte, with the synergistic effect of the cyclic disulfonate and the cyclic carbonate containing a double bond, the SEI film impedance was effectively reduced, so that the low temperature and the cycle performance at normal temperature of the electrode plate having a high press density have been significantly improved. In Comparative Example 8, the addition amount of VC was too low and the SEI film was unstable, and the improvement of the high-temperature cycle performance of the lithium iron phosphate battery was not obvious. In Comparative Example 9, the content of VC was too high, and even the addition of MMDS cannot suppress the increase of the SEI film resistance, thus the performance of the lithium iron phosphate battery was deteriorated.

In Examples 4-6, as the added amount of MMDS was increased, the normal-temperature cycle performance and the low temperature performance of the lithium iron phosphate battery were significantly improved; however, the effect of improving the high-temperature cycle performance was poor. In Comparative Example 10, the added amount of MMDS was too high, and it was easily precipitated in the electrolyte to affect the quality of the electrolyte, meanwhile it was not consumed at the beginning of the cycle, then it was decomposed into by-products due to its own instability, which will deteriorate the performance of the lithium iron phosphate battery instead, especially for high-temperature cycle performance.

As can be seen from Examples 12-15, it is possible to improve the viscosity and the conductivity of the electrolyte by adjusting the composition of the organic solvent, thereby improving the low temperature performance and the cycle performance at normal temperature and high temperature of the lithium iron phosphate battery. For example, in Examples 12-14, the content of the cyclic carbonate was controlled to 30%, and the total amount of the chain carbonate was 70%. Since only the chain carbonic acid esters having a methyl group EMC and DMC were used in Example 14 without adding DEC, so the conductivity, viscosity and other comprehensive performance of the electrolyte were better, and then the comprehensive performance of the lithium iron phosphate battery was also better. In Example 15, a carboxylic acid ester was further added as an organic solvent which could further improve the conductivity and viscosity of the electrolyte and improve the wettability of the high press density electrode plate in the electrolyte, but it would inevitably affect the high-temperature cycle performance of the lithium iron phosphate battery. In Comparative Examples 11 and 12, the conductivity of the electrolyte was too low, and the viscosity was too high, resulting in that the electrode plate has poor wettability in the electrolyte, which will deteriorate the power performance of the lithium iron phosphate battery and deteriorate the low-temperature discharge capacity and normal-temperature cycle performance. In Comparative Example 13, the content of the chain carbonate having a methyl group was low (only 20%), and the content of the carboxylic acid ester was high (up to 50%), which will result in that the conductivity of the electrolyte is too high and that the viscosity is too low. The stability of the electrolyte will be worse, which will seriously deteriorate the high-temperature cycle performance of the lithium iron phosphate battery. So the conductivity and viscosity of the electrolyte also need to be controlled in a certain range in order to make that the low temperature performance and the cycle performance at normal temperature and high temperature of lithium iron phosphate battery have been improved.

In summary, the present application can be used to improve the performance of a lithium iron phosphate battery comprising a high-press density electrode plate by adjusting the amount of the cyclic carbonate containing a double bond and the cyclic disulfonate and adjusting the composition of the organic solvent system. Then an electrolyte having better comprehensive performance can be obtained, and the low temperature performance and the cycle performance at normal temperature and high temperature of the lithium iron phosphate battery have been improved.

It will be apparent to those skilled in the art that the present application may be modified and varied in accordance with the above teachings. Accordingly, the present application is not limited to the specific embodiments disclosed and described above, and modifications and variations of the present application are intended to be included within the scope of the claims of the present application. In addition, although some specific terminology is used in this specification, these terms are for convenience of illustration only and are not intended to limit the present application in any way.

**Claims**

1. A lithium iron phosphate battery comprising:

a positive electrode plate comprising a positive current collector and a positive electrode film provided on the surface of the positive current collector;
a negative electrode plate comprising a negative current collector and a negative electrode film provided on the surface of the negative current collector;
a separator provided between the positive electrode plate and the negative electrode plate; and
an electrolyte comprising an organic solvent, a lithium salt and an electrolyte additive;
**characterized in that**,
a positive active material in the positive electrode plate comprises lithium iron phosphate;
a negative active material in the negative electrode plate comprises graphite;
the electrolyte additive comprises a cyclic carbonate containing a double bond and a cyclic disulfonate represented by the formula I;

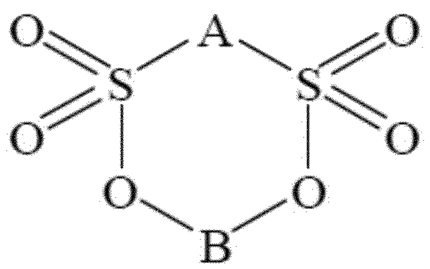

Formula I

in Formula I, A and B are each independently selected from an alkylene group having 1 to 3 carbon atoms; and
in the electrolyte the cyclic carbonate containing a double bond is present in an amount of 0.5% to 4% by mass and the cyclic disulfonate is present in an amount of 0.2% to 1% by mass; and
the electrolyte has a conductivity of 8 mS/cm to 11 mS/cm at 25°C; and
the electrolyte has a viscosity of 2 mPa.s to 4 mPa.s at 25°C.

2. The lithium iron phosphate battery according to claim 1, **characterized in that**, a charge cut-off voltage of the lithium iron phosphate battery does not exceed 3.8 V, and preferably, the charge cut-off voltage of the lithium iron phosphate battery does not exceed 3.6 V.

3. The lithium iron phosphate battery according to claim 1, **characterized in that**, a press density of the negative electrode plate is 1.4 g/cm$^3$ to 1.8 g/cm$^3$.

4. The lithium iron phosphate battery according to claim 1, **characterized in that**, the cyclic carbonate containing a double bond is selected from one or both of vinylene carbonate and vinyl ethylene carbonate.

5. The lithium iron phosphate battery according to claim 1, **characterized in that**, the cyclic disulfonate is selected from one or more of methylene methane disulfonate, ethylene ethane disulfonate and propylene methane disulfonate.

6. The lithium iron phosphate battery according to claim 1, **characterized in that**, in the electrolyte the cyclic carbonate containing a double bond is present in an amount of 0.5% to 3% by mass.

7. The lithium iron phosphate battery according to claim 1, **characterized in that**, the organic solvent includes a mixed solvent of a cyclic carbonate and a chain carbonate, and the organic solvent comprises a chain carbonate having a methyl group, the content of the chain carbonate having a methyl group is 40% or more by mass based on the total mass of the organic solvent of the electrolyte.

8. The lithium iron phosphate battery according to claim 7, **characterized in that**, the organic solvent further comprises a carboxylic acid ester and the content of the carboxylic acid ester is 30% or less by mass based on the total mass of the organic solvent of the electrolyte.

**Patentansprüche**

1. Lithiumeisenphosphatbatterie, umfassend:

eine positive Elektrodenplatte, umfassend einen positiven Stromkollektor und einen positiven Elektrodenfilm, der auf der Oberfläche des positiven Stromkollektors vorgesehen ist;
eine negative Elektrodenplatte, umfassend einen negativen Stromkollektor und einen negativen Elektrodenfilm, der auf der Oberfläche des negativen Stromkollektors vorgesehen ist;
einen Separator, der zwischen der positiven Elektrodenplatte und der negativen Elektrodenplatte vorgesehen ist; und
einen Elektrolyten, umfassend ein organisches Lösungsmittel, ein Lithiumsalz und ein Elektrolytadditiv;
**dadurch gekennzeichnet, dass**
ein positives aktives Material in der positiven Elektrodenplatte Lithiumeisenphosphat umfasst;
ein negatives aktives Material in der negativen Elektrodenplatte Graphit umfasst;
das Elektrolytadditiv ein cyclisches Carbonat, das eine Doppelbindung enthält, und ein cyclisches Disulfonat, der durch die Formel I dargestellt ist, umfasst;

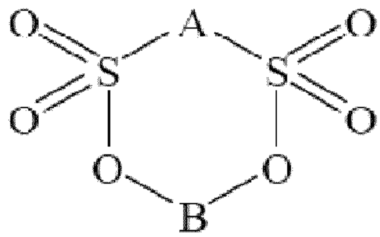
Formel I

in Formel I A und B jeweils unabhängig voneinander aus einer Alkylengruppe mit 1 bis 3 Kohlenstoffatomen ausgewählt sind; und
im Elektrolyten das eine Doppelbindung enthaltende cyclische Carbonat in einer Menge von 0,5 bis 4 Massen-% vorhanden ist und der cyclische Disulfonat in einer Menge von 0,2 bis 1 Massen-% vorhanden ist; und
der Elektrolyt eine Leitfähigkeit von 8 mS/cm bis 11 mS/cm bei 25 ° C aufweist; und
der Elektrolyt eine Viskosität von 2 mPa.s bis 4 mPa.s bei 25 ° C aufweist.

2. Lithiumeisenphosphatbatterie nach Anspruch 1, **dadurch gekennzeichnet, dass** eine Lade-Abschalt-Spannung der Lithiumeisenphosphatbatterie die Spannung von 3,8 V nicht überschreitet und vorzugsweise die Lade-Abschalt-Spannung der Lithiumeisenphosphatbatterie die Spannung von 3,6 V nicht überschreitet.

3. Lithiumeisenphosphatbatterie nach Anspruch 1, **dadurch gekennzeichnet, dass** eine Pressdichte der negativen Elektrodenplatte 1,4 g/$cm^3$ bis 1,8 g/$cm^3$ beträgt.

4. Lithiumeisenphosphatbatterie nach Anspruch 1, **dadurch gekennzeichnet, dass** das eine Doppelbindung enthaltende cyclische Carbonat aus einem oder beiden von Vinylencarbonat und Vinylethylencarbonat ausgewählt ist.

5. Lithiumeisenphosphatbatterie nach Anspruch 1, **dadurch gekennzeichnet, dass** der cyclische Disulfonat aus einem oder mehreren von Methylenmethandisulfonat, Ethylenethandisulfonat und Propylenmethandisulfonat ausgewählt ist.

6. Lithiumeisenphosphatbatterie nach Anspruch 1, **dadurch gekennzeichnet, dass** im Elektrolyten das eine Doppelbindung enthaltende cyclische Carbonat in einer Menge von 0,5 bis 3 Massen-% vorhanden ist.

7. Lithiumeisenphosphatbatterie nach Anspruch 1, **dadurch gekennzeichnet, dass** das organische Lösungsmittel ein gemischtes Lösungsmittel aus einem cyclischen Carbonat und einem Kettencarbonat enthält und das organische Lösungsmittel ein Kettencarbonat mit einer Methylgruppe umfasst, und bezogen auf die Gesamtmasse des organischen Lösungsmittels des Elektrolyten der Gehalt an Kettencarbonat mit einer Methylgruppe 40 Massen-% oder mehr beträgt.

8. Lithiumeisenphosphatbatterie nach Anspruch 7, **dadurch gekennzeichnet, dass** das organische Lösungsmittel ferner einen Carbonsäureester umfasst und bezogen auf die Gesamtmasse des organischen Lösungsmittels des

Elektrolyten der Gehalt an Carbonsäureester 30 Massen-% oder weniger beträgt.

## Revendications

1. Batterie au lithium-fer-phosphate comprenant :

   une plaque d'électrode positive comprenant un collecteur de courant positif et un film d'électrode positive prévu sur la surface du collecteur de courant positif ;
   une plaque d'électrode négative comprenant un collecteur de courant négatif et un film d'électrode négative prévu sur la surface du collecteur de courant négatif ;
   un séparateur prévu entre la plaque d'électrode positive et la plaque d'électrode négative ; et
   un électrolyte comprenant un solvant organique, un sel de lithium et un additif d'électrolyte ;
   **caractérisée en ce que**,
   un matériau actif positif dans la plaque d'électrode positive comprend du lithium-fer-phosphate ;
   un matériau actif négatif dans la plaque d'électrode négative comprend du graphite ;
   l'additif d'électrolyte comprend un carbonate cyclique contenant une double liaison et un disulfonate cyclique représenté par la formule I ;

   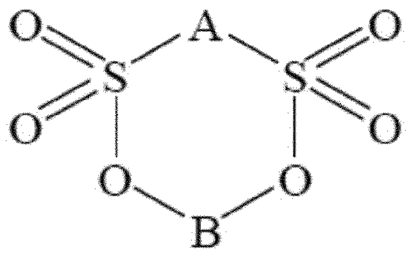
   Formule I

   dans la Formule I, A et B sont chacun indépendamment choisis parmi un groupe alkylène ayant 1 à 3 atomes de carbone ; et
   dans l'électrolyte, le carbonate cyclique contenant une double liaison est présent en une quantité de 0,5 % à 4 % en masse et le disulfonate cyclique est présent en une quantité de 0,2 % à 1 % en masse ; et
   l'électrolyte a une conductivité de 8 mS/cm à 11 mS/cm à 25°C ; et
   l'électrolyte a une viscosité de 2 mPa.s à 4 mPa.s à 25°C.

2. Batterie au lithium-fer-phosphate selon la revendication 1, **caractérisée en ce que** la tension de coupure de charge de la batterie au lithium-fer-phosphate ne dépasse pas 3,8 V, et de préférence, la tension de coupure de charge de la batterie au lithium-fer-phosphate ne dépasse pas 3,6 V.

3. Batterie au lithium-fer-phosphate selon la revendication 1, **caractérisée en ce que** la densité sous compression de la plaque d'électrode négative est de 1,4 $g/cm^3$ à 1,8 $g/cm^3$.

4. Batterie au lithium-fer-phosphate selon la revendication 1, **caractérisée en ce que** le carbonate cyclique contenant une double liaison est choisi à partir de l'un ou des deux du carbonate de vinylène et du carbonate de vinyléthylène.

5. Batterie au lithium-fer-phosphate selon la revendication 1, **caractérisée en ce que** le disulfonate cyclique est choisi à partir d'un ou plusieurs du méthanedisulfonate de méthylène, de l'éthanedisulfonate d'éthylène et du méthanedisulfonate de propylène.

6. Batterie au lithium-fer-phosphate selon la revendication 1, **caractérisée en ce que**, dans l'électrolyte, le carbonate cyclique contenant une double liaison est présent en une quantité de 0,5 % à 3 % en masse.

7. Batterie au lithium-fer-phosphate selon la revendication 1, **caractérisée en ce que** le solvant organique comporte un solvant mixte d'un carbonate cyclique et d'un carbonate en chaîne, et le solvant organique comprend un carbonate en chaîne ayant un groupe méthyle, la teneur du carbonate en chaîne ayant un groupe méthyle est supérieure ou égale à 40 % en masse par rapport à la masse totale du solvant organique de l'électrolyte.

8. Batterie au lithium-fer-phosphate selon la revendication 7, **caractérisée en ce que** le solvant organique comprend en outre un ester d'acide carboxylique et la teneur en ester d'acide carboxylique est inférieure ou égale à 30% en masse par rapport à la masse totale du solvant organique de l'électrolyte.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 102983358 A